# EUROPÄISCHE PATENTSCHRIFT

(11) **EP 1 500 808 B1**
(45) Veröffentlichungstag und Bekanntmachung des Hinweises auf die Patenterteilung: **10.05.2006**
(21) Anmeldenummer: 03102285.8
(22) Anmeldetag: 24.07.2003
(51) Int. Cl.: F02G 5/02, F01N 3/20

(54) **Verfahren und System zur Steuerung der Abgastemperatur einer Brennkraftmaschine**
System and method for controlling the temperature of an internal combustion engine exhaust gas temperature
Système et mèthode de commande de la temperature des gaz d'échappement d'un moteur à combustion interne

(43) Veröffentlichungstag der Anmeldung: 26.01.2005
(73) Patentinhaber: Ford Global Technologies, LLC, A subsidary of Ford Motor Company, Dearborn, MI 48126 (US)
(72) Erfinder: Kok, Daniel Benjamin, 6343 CA, Klimmen (NL); Leyten, Max Johan Adriaan, 6291EM, Vaals (NL)
(74) Vertreter: Drömer, Hans-Carsten

(56) Entgegenhaltungen:
- EP-A- 0 511 654
- EP-A- 1 201 906
- US-A1- 2001 036 428
- US-A1- 2002 017 098
- US-A1- 2003 084 666

## Beschreibung

Die Erfindung betrifft ein Verfahren und ein System zur Steuerung der Temperatur, vorzugsweise eines dem Katalysator einer Brennkraftmaschine in einem Kraftfahrzeug zugeführten Abgases, mit Hilfe eines thermoelektrischen Generators, zur Reduzierung der für den Motor verwendeten Kraftstoffmenge und Verbesserung des Energienutzungsgrades.

Die Wirkungsweise thermoelektrischer Generatoren ist aus dem Stand der Technik bekannt. In früheren Veröffentlichungen wurden diese zur Gewinnung von Strom aus dem Abgas vorgeschlagen. In der US-PS 6,172,427 und in der US 2002/0017098 wird die Wirkungsweise eines thermoelektrischen Generators zur Stromgewinnung aus Abgas als Motorabgasstromgeneratoreinrichtung und dessen Aufbau ausführlich beschrieben.

In anderen Veröffentlichungen wird von verschiedenen Möglichkeiten, wie beispielsweise von außen angeordneten Kraftstoffbrennern bis hin zur latenten Wärmespeicherung, berichtet, mit denen die Aufwärmphase der Brennkraftmaschine und des Katalysators verbessert werden soll, wobei diese Möglichkeiten jedoch den Kraftstoffverbrauch und das Gewicht des Fahrzeuges negativ beeinflussen. Herkömmliche Maßnahmen zur Erhöhung der Temperatur des zugeführten Abgases zur Regeneration des Speicherkatalysators sind die Motordrosselung und das Einspritzen von zusätzlichem Brennstoff, was sich ungünstig auf den Brennstoffverbrauch auswirkt.

Zur Reduzierung des Kraftstoffverbrauchs und der Abgaswerte über einen Arbeitszyklus einer Brennkraftmaschine wird vorzugsweise die Aufwärmphase der Brennkraftmaschine mit einem Drei-Wege-Katalysator, einem Oxidationskatalysator oder NOx-Katalysator oder einem Feststoffkatalysator verkürzt. Bei modernen Brennkraftmaschinen wird das Abgas bei niedrigen Temperaturen ausgestoßen und es wird wenig Wärme an das Kühlsystem abgegeben. Das hat eine negative Auswirkung auf die Dauer der Aufwärmphase des Katalysators und somit auf die Abgaswerte. Außerdem beeinträchtigt die reduzierte Wärmeabgabe an das Kühlsystem des Motors den Wärmekomfort der Fahrzeuginsassen. Um das Aufwärmverhalten der Brennkraftmaschine zu verbessern, wird der Motor vorzugsweise sofort nach dem Kaltstart unter hoher Last betrieben. Durch die zusätzliche Last des Generators (oder auch Lichtmaschine genannt) kann dieses Aufwärmverhalten verbessert werden. Die zusätzliche Last soll deshalb vorzugsweise dazu verwendet werden, die Aufwärmung des Abgases zu verbessern.

Außerdem benötigen Speicherkatalysatoren wie z. B. NOx- oder Partikelabscheider hohe Abgastemperaturen während der Regenerationsphasen des Katalysators. Herkömmliche Maßnahmen zur Erhöhung der Temperatur des zugeführten Abgases sind die Motordrosselung und das Einspritzen von zusätzlichem Kraftstoff, was sich ungünstig auf die Kraftstoffkosten auswirkt und vorübergehend die Reaktion des Motors und daher die Fahreigenschaften beeinträchtigt.

Die Aufgabe der vorliegenden Erfindung besteht deshalb darin, ein System zur Steuerung der Abgastemperatur zu entwickeln, welches die o.a. Nachteile überwindet.

Erfindungsgemäß wird diese Aufgabe durch die Merkmale der Ansprüche 1 und 6 gelöst. Vorteilhafte Weiterbildungen der Erfindung sind in den jeweils zugehörigen Ansprüchen enthalten.

Die Zusätzliche Last des Generators soll zur Verbesserung des Aufwärmverhaltens des Abgases verwendet werden. Dabei wurde überraschend gefunden, daß der Wärmepumpeneffekt eines thermoelektrischer Generator (TEG) der im Abgaskanal einer Brennkraftmaschine vor dem Katalysator geschaltet ist, dazu eingesetzt werden kann, die Temperatur des dem Katalysator zugeführten Abgases aktiv zu steuern. In Abhängigkeit von der eingestellten Spannungspolarität des TEG kann die Temperatur des zugeführten Gases durch diesen erhöht oder gesenkt werden. In der Aufwärmphase kann ein weiterer an die Brennkraftmaschine gekoppelter Generator den TEG antreiben, wodurch die Temperatur des dem Katalysator zugeführten Gases und die Last der Brennkraftmaschine erhöht wird, was beides zu einer Verbesserung des Aufwärmverhaltens des Katalysators und der Brennkraftmaschine führt. Die Verkürzung der Aufwärmphase und der damit verbundene verringerte Abgassaustoß bergen ein großes Potential zur Senkung der Gesamtkosten des Abgasaufbereitungssystems.

Die Erfindung betrifft auch ein System zur Steuerung der Temperatur eines dem Katalysator einer Brennkraftmaschine in einem Kraftfahrzeug zugeführten Abgases mit Hilfe eines thermoelektrischen Generators, der in der Motorabgasleitung angeordnet ist. Vorteilhaft ist hierbei der thermoelektrische Generator in der Motorabgasleitung vor dem Katalysator angeordnet ist und mit einer Kontroll- und Überwachungseinrichtung verbunden. Der thermoelektrische Generator ist dabei in Abhängigkeit von der Abgastemperatur als Wärmepumpe zur Erhöhung der Abgastemperatur im Katalysator oder als Generator zur Energieerzeugung aus der Motorabwärme einsetzbar. Die Wirkungsweise des Systems ergibt sich dabei aus dem oben beschriebenen Verfahren, worauf zur Vermeidung von Wiederholungen ausdrücklich hingewiesen wird.

Die Erfindung soll nachfolgend anhand eines Ausführungsbeispieles näher erläutert werden.
In den Zeichnungen zeigen
- Figur 1:: die Wirkungsweise eines als Stromerzeuger verwendeten TEG in schematischer Darstellung;
- Figur 2:: die Wirkungsweise eines als Wärmepumpe verwendeten TEG in schematischer Darstellung;
- Figur 3 :: ein Blockschaltbild des Systems.

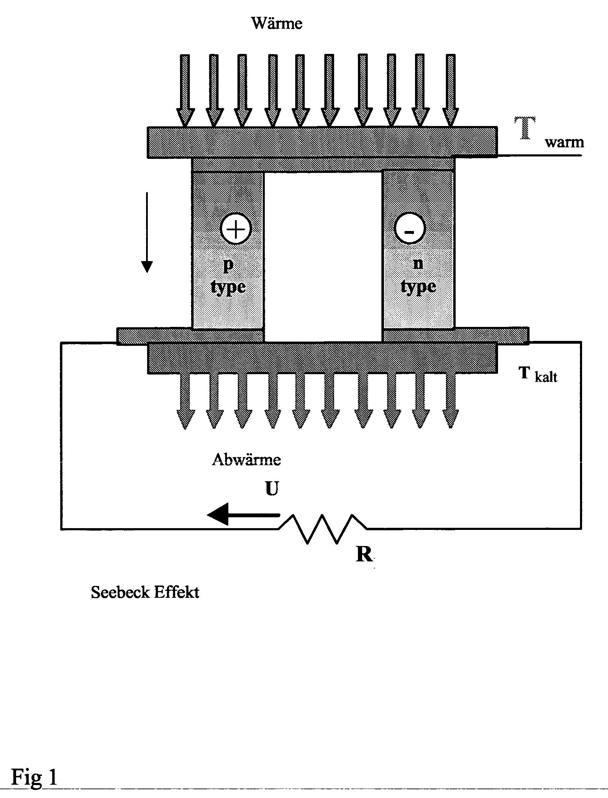

Ein thermoelektrischer Generator (TEG) besteht aus einem thermoelektrischen Material, das sandwichartig zwischen zwei Wärmetauschern eingebettet ist und so beschaffen ist, daß er elektrische Energie unter Ausnutzung des Seebeck-Effekts aufgrund einer Temperaturdifferenz zwischen einer Hochtemperaturquelle und einer Niedertemperaturquelle erzeugt. Die Wärmeenergie des Abgases kann als Hochtemperaturquelle verwendet werden, während die Außenluft oder ein anderes Medium als Niedertemperaturquelle verwendet werden kann. Erhitzt der auf der Hochtemperaturseite angeordnete Wärmetauscher das thermoelektrische Material auf der einen Seite und wird das thermoelektrische Material von dem auf der Kaltseite angeordneten Wärmetauscher gekühlt, so entsteht eine elektrische Spannung U, die dazu verwendet werden kann, elektrischen Strom zu erzeugen und diesen an das elektrische Stromnetz des Fahrzeuges abzugeben. Der thermoelektrische Generator besteht dabei aus einer hochtemperaturseitigen Grundplatte T warm, die Wärme z. B. vom Motorabgas wirksam absorbiert; einer niedertemperaturseitige Grundplatte T kalt, sich auf Seiten einer niedrigen Temperatur befindet und gekühlt wird; Elektroden A, B und Leitungsdrähten C. Die thermoelektrischen Umwandlerelementpaare bestehen beispielsweise aus einem N-Halbleiterelement und aus einem P-Halbleiterelement. Mehrere Paare können dabei miteinander in Serie geschaltet sein um ein Modul zu bilden, das zur Stromerzeugung dient. Dieser Stromerzeugungsprozeß ist in der Figur 1 dargestellt.

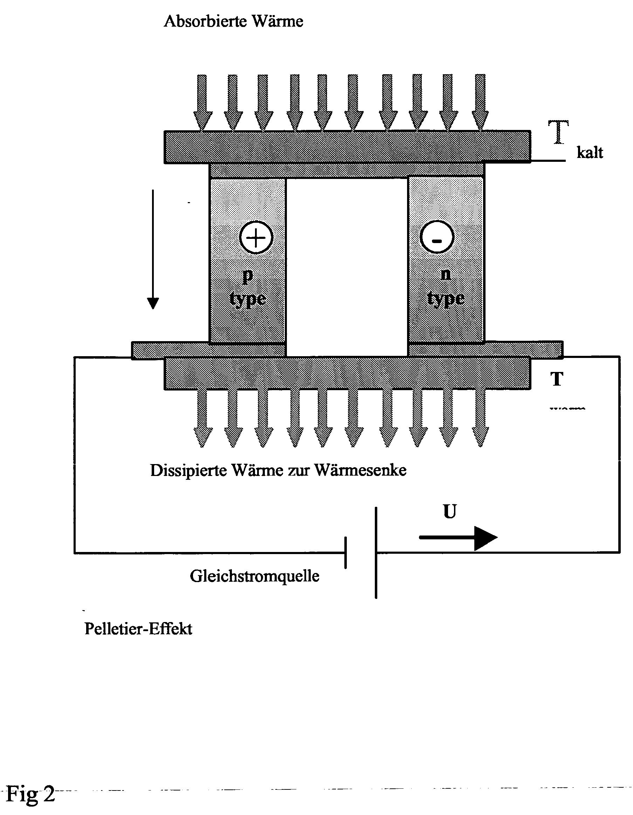

In der Figur 2 ist dargestellt, wie der TEG unter Ausnutzung des Peltier -Effekts als Wärmepumpe oder Kühlgenerator arbeitet, wenn er von außen mit einer elektrischen Spannung versorgt wird. Diese Wärmepumpe arbeitet mit einem Leistungskoeffizienten, der typischerweise im Bereich zwischen 4 bis 8 liegt. Wird also 1 kW elektrische Energie an den TEG geliefert, so werden 4 bis 8kW Wärme auf die Warmseite des Wärmetauschers übertragen. Je größer die Menge an elektrischer Energie, die dem TEG geliefert wird, desto größer die Leistung der Wärmepumpe. Die Warm- und Kaltseite des TEG können durch Umkehr der Spannungspolarität des TEG umgekehrt werden. Ist der TEG vor dem Katalysator angeordnet, so kann dieser Wärmepumpeneffekt dazu verwendet werden, die Temperatur des dem Katalysator zugeführten Abgases aktiv zu steuern. In Abhängigkeit von der eingestellten Spannungspolarität des TEG kann die Temperatur des zugeführten Abgases durch diesen erhöht oder gesenkt werden.

In der Aufwärmphase kann der TEG durch den an die Brennkraftmaschine gekoppelten Generator (nicht dargestellt) mit Energie versorgt werden. Dies erhöht die Motorlast und dadurch das Aufwärmen des Motors und des Abgases. Gleichzeitig kann der erzeugte Strom in den TEG gespeist werden, welcher dann wie eine Wärmepumpe arbeitet und die Temperatur des stromaufwärts befindlichen Abgases erhöht. Dieser Effekt verbessert das Aufwärmverhalten des Katalysators und ist daher in der Lage, den Abgasausstoß zu verringern. Damit können die Gesamtkosten des Abgasaufbereitungssystems vorteilhaft verringert werden.

In Phasen, in denen eine Regeneration des Speicherkatalysators erforderlich ist, kann die Abgastemperatur auch dadurch gesteuert werden, daß der TEG ähnlich wie im vorgenannten Verfahren als Wärmepumpe gesteuert wird. Dadurch müssen herkömmliche Maßnahmen zur Erhöhung der Abgastemperatur durch Motordrosselung und Einspritzen von zusätzlichem Kraftstoff weniger oft eingesetzt werden, was sich wiederum günstig auf die Kraftstoffkosten auswirkt.

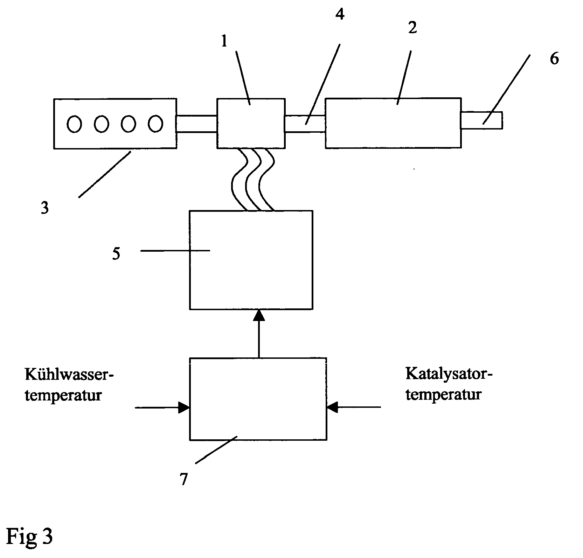

In der Figur 3 ist ein Blockschaltbild des Systems mit Steueralgorithmus dargestellt, wobei Kühlwassertemperatur, Temperatur des Katalysators und Abgastemperatur als Ein- bzw. Ausgangssignale dienen. Darin bedeuten
1- TEG;
2- Katalysator;
3- Brennkraftmaschine;
4- Motorabgasleitung;
5- Kontroll- und Überwachungseinrichtung;
6- Auspuffrohr;
7 - Motorsteuerung.

## Patentansprüche

1. Verfahren zur Steuerung der Temperatur eines dem Katalysator einer Brennkraftmaschine in einem Kraftfahrzeug zugeführten Abgases mit Hilfe eines thermoelektrischen Generators, der in der Motorabgasleitung angeordnet ist,
**dadurch gekennzeichnet, daß**
der thermoelektrische Generator (1) in der Motorabgasleitung (4) vor den Katalysator (2) geschaltet ist, wobei durch dessen Wärmepumpeneffekt die Temperatur des dem Katalysator (2) zugeführten Abgases in Abhängigkeit von der eingestellten Spannungspolarität des thermoelektrischen Generators (1) aktiv gesteuert wird.

2. Verfahren nach Anspruch 1,
**dadurch gekennzeichnet, daß**
der thermoelektrische Generator (1) in der Aufwärmphase durch einen an die Brennkraftmaschine (3) gekoppelten Generator mit einer elektrischen Spannung versorgt wird.

3. Verfahren nach einem der o.g. Ansprüche,
**dadurch gekennzeichnet, daß**
der thermoelektrische Generator (1) aus der Wärmeenergie des Motors / Abgases elektrische Leistung erzeugt.

4. Verfahren nach einem der o.g. Ansprüche,
**dadurch gekennzeichnet, daß**
der thermoelektrische Generator (1) in Abhängigkeit von der Abgastemperatur als Wärmepumpe zur Erhöhung der Abgastemperatur im Katalysator arbeitet, oder eine elektrische Leistung aus der Motorabwärme erzeugt.

5. Verfahren nach einem der o.g. Ansprüche,
**dadurch gekennzeichnet, daß**
der jeweilige Betriebszustand des thermoelektrischen Generators (1) über eine Kontroll- und Überwachungseinrichtung (5) einstellbar ist.

6. System zur Steuerung der Temperatur eines dem Katalysator einer Brennkraftmaschine in einem Kraftfahrzeug zugeführten Abgases mit Hilfe, eines thermoelektrischen Generators, der in der Motorabgasleitung angeordnet ist
**dadurch gekennzeichnet, daß**
der thermoelektrische Generator (1) in der Motorabgasleitung (4) vor dem Katalysator (2) angeordnet ist und mit einer Kontroll- und Überwachungseinrichtung (5) in Verbindung steht, wobei der thermoelektrische Generator (1) in Abhängigkeit von der Abgastemperatur als Wärmepumpe zur Erhöhung der Abgastemperatur im Katalysator (2) oder als Generator zur Energieerzeugung aus der Motorabwärme einsetzbar ist.

7. System nach Anspruch 6,
**dadurch gekennzeichnet, daß**
durch den Wärmepumpeneffekt die Temperatur des dem Katalysator (2) zugeführten Abgases in Abhängigkeit von der eingestellten Spannungspolarität des thermoelektrischen Generators (1) aktiv steuerbar ist.

8. System nach einem der o.g. Ansprüche,
**dadurch gekennzeichnet, daß**
der thermoelektrische Generator (1) in der Aufwärmphase durch einen an die Brennkraftmaschine (3) gekoppelten Generator mit einer elektrischen Spannung versorgbar ist.

## Claims

1. Method for controlling the temperature of an exhaust gas fed to the catalytic converter of an internal combustion engine in a motor vehicle, using a thermoelectric generator which is arranged in the engine exhaust line, **characterized in that** the thermoelectric generator (1) is connected into the engine exhaust line (4) upstream of the catalytic converter (2), the temperature of the exhaust gas which is fed to the catalytic converter (2) being effectively controlled by the heat pumping effect of said generator (1) as a function of the set voltage polarity of the thermoelectric generator (1).

2. Method according to Claim 1, **characterized in that** the thermoelectric generator (1) is supplied in the warm-up phase with an electrical voltage by means of a generator which is connected to the internal combustion engine (3).

3. Method according to one of the abovementioned claims, **characterized in that** the thermoelectric generator (1) generates electrical power from the thermal energy of the engine/exhaust gas.

4. Method according to one of the abovementioned claims, **characterized in that** the thermoelectric generator (1) operates as a heat pump as a function of the exhaust gas temperature in order to increase the exhaust gas temperature in the catalytic converter, or generates electrical power from the waste heat of the engine.

5. Method according to one of the abovementioned claims, **characterized in that** the respective operating state of the thermoelectric generator (1) can be set by means of a monitoring device (5).

6. System for controlling the temperature of an exhaust gas, fed to the catalytic converter of an internal combustion engine in a motor vehicle, using a thermoelectric generator which is arranged in the engine exhaust line, **characterized in that** the thermoelectric generator (1) is arranged upstream of the catalytic converter (2) in the engine exhaust line (4) and is connected to a monitoring device (5), it being possible to use the thermoelectric generator (1) as a heat pump as a function of the exhaust gas temperature in order to increase the exhaust gas temperature in the catalytic converter (2) or as a generator in order to generate power from the waste heat of the engine.

7. System according to Claim 6, **characterized in that**, by means of the heat pumping effect, it is possible to effectively control the temperature of the exhaust gas, fed to the catalytic converter (2), as a function of the set voltage polarity of the thermoelectric generator (1).

8. System according to one of the abovementioned claims, **characterized in that** the thermoelectric generator (1) can be supplied in the warm-up phase with an electrical voltage by means of a generator which is connected to the internal combustion engine (3).

## Revendications

1. Procédé de commande de la température d'un gaz d'échappement acheminé au catalyseur d'un moteur à combustion interne dans un véhicule automobile à l'aide d'un générateur thermoélectrique qui est disposé dans le tuyau d'échappement du moteur,
**caractérisé en ce que**
le générateur thermoélectrique (1) dans le tuyau d'échappement du moteur (4) est monté avant le catalyseur (2), la température du gaz d'échappement acheminé au catalyseur (2) étant commandée activement, par son effet de pompe à chaleur, en fonction de la polarité de la tension ajustée du générateur thermoélectrique (1).

2. Procédé selon la revendication 1,
**caractérisé en ce que**
le générateur thermoélectrique (1) est alimenté en tension électrique dans la phase de chauffage par un générateur accouplé au moteur à combustion interne (3).

3. Procédé selon l'une quelconque des revendications précédentes,
**caractérisé en ce que**
le générateur thermoélectrique (1) produit une puissance électrique à partir de l'énergie thermique du moteur / du gaz d'échappement.

4. Procédé selon l'une quelconque des revendications précédentes,
**caractérisé en ce que**
le générateur thermoélectrique (1) fonctionne dans le catalyseur en fonction de la température du gaz d'échappement sous forme de pompe à chaleur pour augmenter la température du gaz d'échappement, ou bien produit une puissance électrique à partir de la chaleur fournie par le moteur.

5. Procédé selon l'une quelconque des revendications précédentes,
**caractérisé en ce que**
l'état de fonctionnement respectif du générateur thermoélectrique (1) peut être ajusté par le biais d'un dispositif de contrôle et de surveillance (5).

6. Système de commande de la température d'un gaz d'échappement acheminé au catalyseur d'un moteur à combustion interne dans un véhicule automobile à l'aide d'un générateur thermoélectrique qui est disposé dans le tuyau d'échappement du moteur,
**caractérisé en ce que**
le générateur thermoélectrique (1) est disposé dans le tuyau d'échappement du moteur (4) avant le catalyseur (2) et est en liaison avec un dispositif de contrôle et de surveillance (5), le générateur thermoélectrique (1) pouvant être utilisé en fonction de la température du gaz d'échappement comme pompe à chaleur pour augmenter la température du gaz d'échappement dans le catalyseur (2) ou bien comme générateur pour produire de l'énergie à partir de la chaleur produite par le moteur.

7. Système selon la revendication 6,
**caractérisé en ce que**
la température du gaz d'échappement acheminé au catalyseur (2) peut être commandée activement, par l'effet de pompe à chaleur, en fonction de la polarité de la tension ajustée du générateur thermoélectrique (1).

8. Système selon l'une quelconque des revendications précédentes,
**caractérisé en ce que**
le générateur thermoélectrique (1) peut être alimenté en tension électrique dans la phase de chauffage par un générateur accouplé au moteur à combustion interne (3).
